# EUROPEAN PATENT APPLICATION

(11) **EP 4 840 729 A1**
(43) Date of publication of application: **18.11.2026**
(21) Application number: 26152832.7
(22) Date of filing: 20.01.2026
(51) Int. Cl.: B62D 25/08

(54) **VEHICLE FRONT STRUCTURE**

(30) Priority: 12.05.2025 JP 2025079933
(71) Applicant: Suzuki Motor Corporation, Hamamatsu-shi, Shizuoka 432-8611 (JP)
(72) Inventor: IKOMA, Kyohei, Hamamatsu-shi, 432-8611 (JP); NAGASAKI, Yuta, Hamamatsu-shi, 432-8611 (JP)
(74) Representative: Plasseraud IP

(57) **Abstract**

[Problem to be Solved] To reliably exhibit impact absorption performance of a vehicle front portion.

[Solution] A vehicle front structure 100 includes a side member 30, a cross member 50 extending in a vehicle width direction, and a bracket 55 joined to a vehicle-width-direction side portion 30b of a front portion of the side member 30, a vehicle-width-direction end portion 50a of the cross member 50 is coupled to a front end portion 30a of the side member 30, and an end portion 50a of the cross member 50 includes a first coupling portion 51 and a second coupling portion 52, the first coupling portion 51 being located forward of the front end portion 30a of the side member 30 and coupled to the front end portion 30a, the second coupling portion 52 being spaced in the vehicle width direction toward the bracket 55 side from the front end portion 30a of the side member 30 and coupled to a front end portion 55a of the bracket 55.

## Description

### [Technical Field]

The present invention relates to vehicle front structures.

### [Background Art]

A structure including a pair of side members and a cross member is provided at a front portion of a vehicle such as an automobile in some cases, the pair of side members being spaced from each other in the vehicle width direction and extending in the vehicle front-rear direction, the cross member connecting front end portions of the pair of side members and extending in the vehicle width direction along the rear surface of a front bumper. With such a structure of the vehicle front portion, an impact load input to the vehicle front portion in a frontal collision or the like of the vehicle is efficiently transferred to the side members and the like through the cross member to deform the side members and the like so that impact energy is absorbed as deformation energy, which ensures predetermined impact absorption performance.

A vehicle front structure disclosed in Patent Literature 1 is known as an example of a vehicle front structure having impact absorption performance as described above. Patent Literature 1 discloses that when the cross member is curved toward the vehicle rear side by an impact load in a frontal collision, edges of two of upper and lower corner portions on the vehicle-width-direction inner side at the front end of front side members (hereinafter referred to as side members) are strongly pressed into contact with the rear surface of an end portion of the cross member, and as a result, the cross member may potentially be damaged and broken. Furthermore, in the vehicle front structure of this example, from the perspective of preventing damage of the cross member, convex bead portions bulging toward the vehicle front side are provided at places corresponding to the corner portions in the cross member to prevent the edges of the corner portions at the front ends of the side members from being strongly pressed into contact with the cross member. Accordingly, the vehicle front structure of this example is intended to ensure predetermined impact absorption performance by utilizing the cross member and the side members by constituting the cross member itself so as not to be easily broken in a frontal collision.

### [Citation List]

### [Patent Literature]

[Patent Literature 1] JP 2020-121587 A

### [Summary of Invention]

### [Problem to be Solved by the Invention]

However, in the vehicle front structure disclosed in Patent Literature 1, the cross member is joined to the side members by fastening the end portion of the cross member to the front end portions of the side members by bolt fastening. Specifically, joined places between the cross member and the side members are concentrated at the front end portions of the side members, and at a frontal collision, stress is concentrated on joined places (that is, fastening places) at the front end portions of the side members. As a result, at a frontal collision, bolts may be broken and the cross member may fall off, and accordingly, an impact load is potentially not sufficiently transferred to the side members. Thus, with the vehicle front structure of this example, predetermined impact absorption performance by utilizing the cross member and the side members is potentially not sufficiently exhibited.

Thus, an object of the present invention is to provide a vehicle front structure capable of reliably exhibiting impact absorption performance of a vehicle front portion.

### [Means for Solving the Problem]

According to an aspect of the present invention for achieving the above-described object, a vehicle front structure is provided, the vehicle front structure including: a dash panel provided at a vehicle front portion; a front bumper provided forward of the dash panel and extending in a vehicle width direction; a side member extending from a vehicle-width-direction outer portion of a lower portion of the dash panel toward the front bumper; and a cross member extending in the vehicle width direction along a rear surface of the front bumper, a vehicle-width-direction end portion of the cross member being coupled to a front end portion of the side member. The vehicle front structure includes a bracket joined to a vehicle-width-direction side portion of a front portion of the side member, and the end portion of the cross member includes a first coupling portion and a second coupling portion, the first coupling portion being located forward of, and coupled to, the front end portion of the side member, the second coupling portion being spaced in the vehicle width direction toward the bracket side from the front end portion of the side member and coupled to a front end portion of the bracket.

### [Advantageous Effect of Invention]

According to the present invention, it is possible to provide a vehicle front structure capable of reliably exhibiting impact absorption performance of a vehicle front portion.

### [Brief Description of Drawings]

[Figure 1] Figure 1 is a partial front view of a vehicle front structure according to an embodiment of the present invention.
[Figure 2] Figure 2 is a side view of the vehicle front structure.
[Figure 3] Figure 3 is a perspective view of a main portion of the vehicle front structure when viewed from the vehicle front side.
[Figure 4] Figure 4 is a perspective view of the main portion of the vehicle front structure when viewed from the vehicle lower side and the vehicle rear side.
[Figure 5] Figure 5 is a perspective view of the main portion of the vehicle front structure when viewed from the vehicle upper side and the vehicle rear side.
[Figure 6] Figure 6 is a perspective view for description of the structure of a side member of the vehicle front structure.
[Figure 7] Figure 7 is a front view for description of the structure of the side member.
[Figure 8] Figure 8 is a partially enlarged front view of the vehicle front structure.
[Figure 9] Figure 9 is a top view of the main portion of the vehicle front structure.
[Figure 10] Figure 10 is a partially enlarged front view of a part of the vehicle front structure, the part including a front end plate.
[Figure 11] Figure 11 is an enlarged top view of Figure 10 when viewed in direction A.
[Figure 12] Figure 12 is a line B-B cross-sectional view of Figure 10.

### [Mode for Carrying Out the Invention]

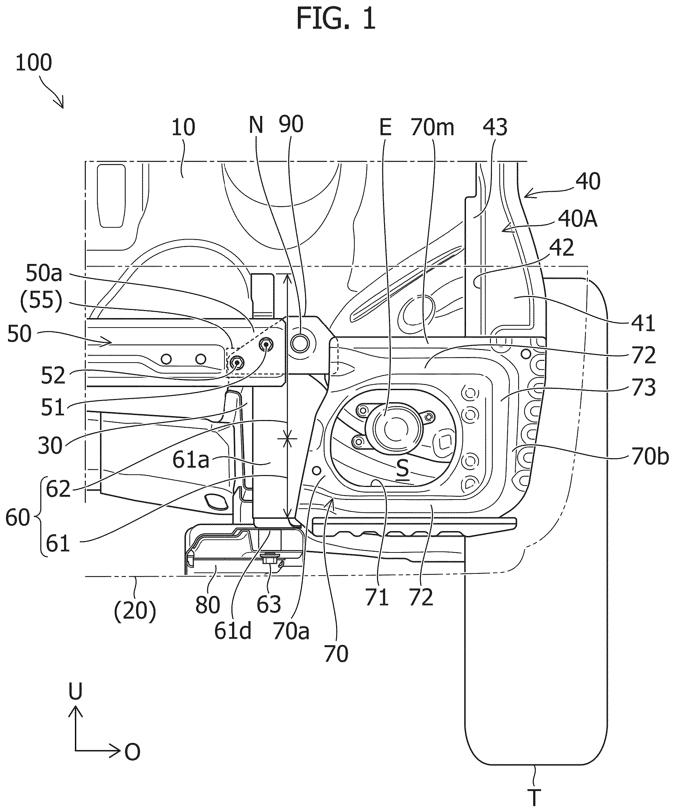

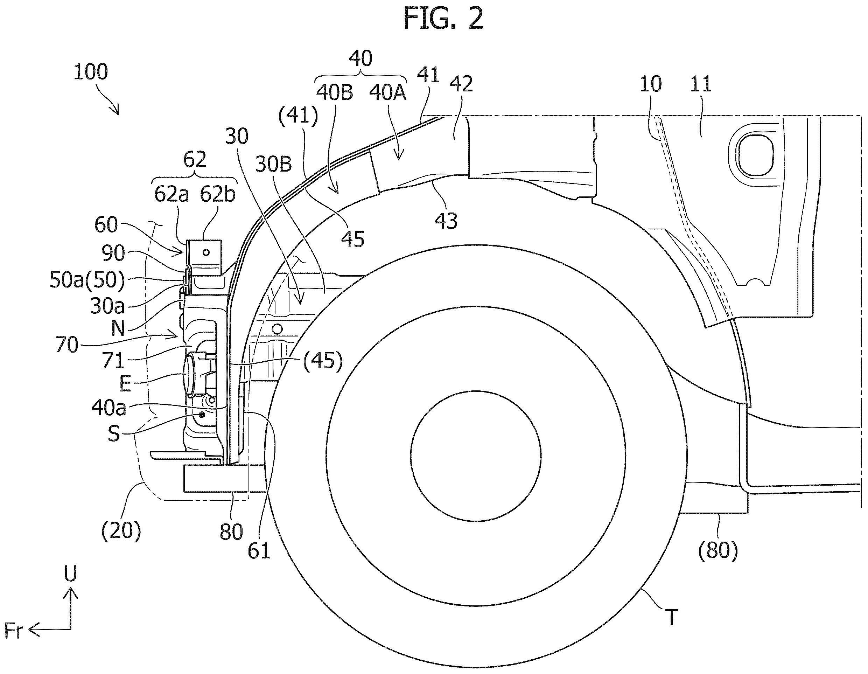

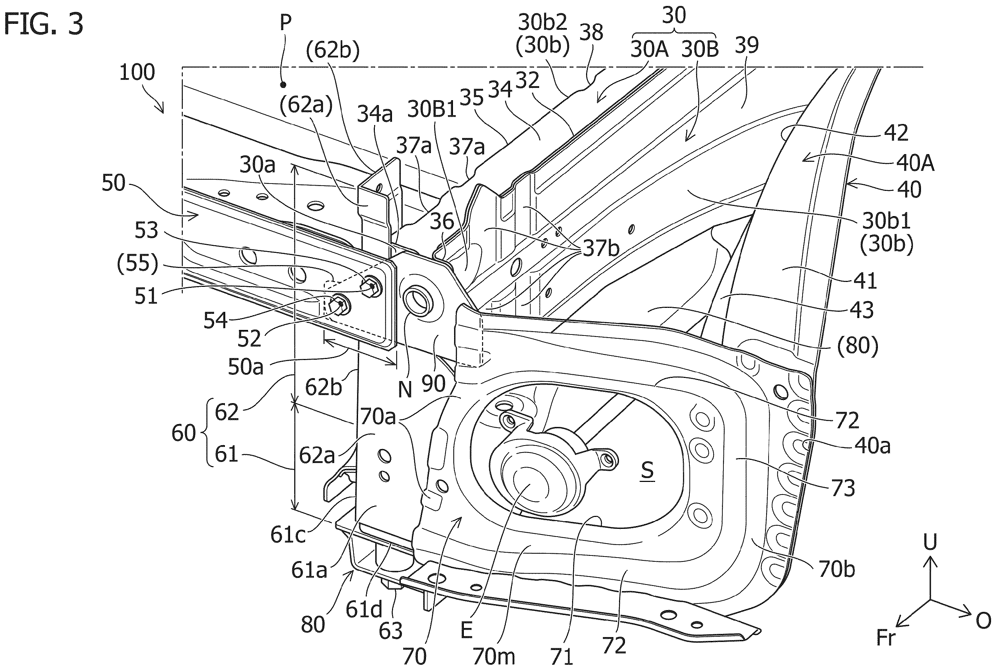

An embodiment of the present invention will be described below with reference to the accompanying drawings. Figures 1 to 3 are diagrams for description of a vehicle front structure 100 according to the embodiment of the present invention: Figure 1 is a partial front view of the vehicle front structure 100; Figure 2 is a side view of the vehicle front structure 100; and Figure 3 is a perspective view of a main portion of the vehicle front structure 100 when viewed from the vehicle front side. Note that, in the diagrams, the direction of arrow Fr indicates the front side in the vehicle front-rear direction, the direction of arrow O indicates the vehicle outer side in the vehicle width direction, and the direction of arrow U indicates the upper side in the vehicle up-down direction. In description below, "front" and "rear" correspond to front and rear in the vehicle front-rear direction, "upper" and "lower" correspond to upper and lower in the vehicle up-down direction, and "left" and "right" correspond to left and right in the vehicle width direction in a state in which an occupant in the vehicle is facing the vehicle front side.

As illustrated in Figures 1 to 3, the vehicle front structure 100 of the present embodiment is mainly applied to a vehicle front portion. The vehicle to which the vehicle front structure 100 is applied is not particularly limited, but is, for example, a small-sized electric vehicle having a relatively short dimension of the vehicle front portion in the vehicle front-rear direction. For example, an electric motor for driving the vehicle is mounted in the vehicle, and the electric motor operates by electric power supplied from a battery. Note that, in each drawing, a portion of the vehicle front structure 100, the portion including a left front wheel T of the vehicle, is illustrated. A portion of the vehicle front structure 100, the portion including a right front wheel, has the same structure as the part including the left front wheel T, except that the portion including the right front wheel is symmetric to the portion including the left front wheel T with respect to the left and right sides.

As illustrated in Figures 1 to 3, the vehicle front structure 100 of the present embodiment includes a dash panel 10, a front bumper 20, a side member 30, a dash side frame 40, a cross member 50, a support brace 60, and a front panel 70.

The dash panel 10 is provided at the vehicle front portion. The dash panel 10 is, for example, a panel material separating a powertrain compartment P and a passenger chamber and extends substantially in the vehicle width direction and the vehicle up-down direction. Drive devices and the like including the electric motor are disposed in the powertrain compartment P. As illustrated in Figure 2, a dash side panel 11 that is a panel material extending in the vehicle front-rear direction is joined to an upper portion of a vehicle-width-direction outer portion of the dash panel 10.

The front bumper 20 is a member provided forward of the dash panel 10 and extending in the vehicle width direction and is located at the vehicle front end. An electrical component E is attached to a vehicle-width-direction outer portion of the front bumper 20 so as to protrude rearward from the rear surface of the front bumper 20. The electrical component E is not particularly limited, but it is a fog lamp in the illustrated example. The vehicle to which the vehicle front structure 100 of the present embodiment is applied, is in relation to the front bumper 20, a vehicle in which the distance between the front end of the front wheel T and the front bumper 20 is significantly short.

The side member 30 is a high-rigidity member constituting part of a vehicle body structural member (vehicle body framework) at a bottom portion of a vehicle body. The side member 30 is also referred to as a front side member. The side member 30 extends toward the front bumper 20 (forward) from a vehicle-width-direction outer portion of a lower portion of the dash panel 10. The vehicle to which the vehicle front structure 100 of the present embodiment is applied is, in relation to the side member 30, a vehicle in which the distance between the front end of the side member 30 and the front bumper 20 is also significantly short.

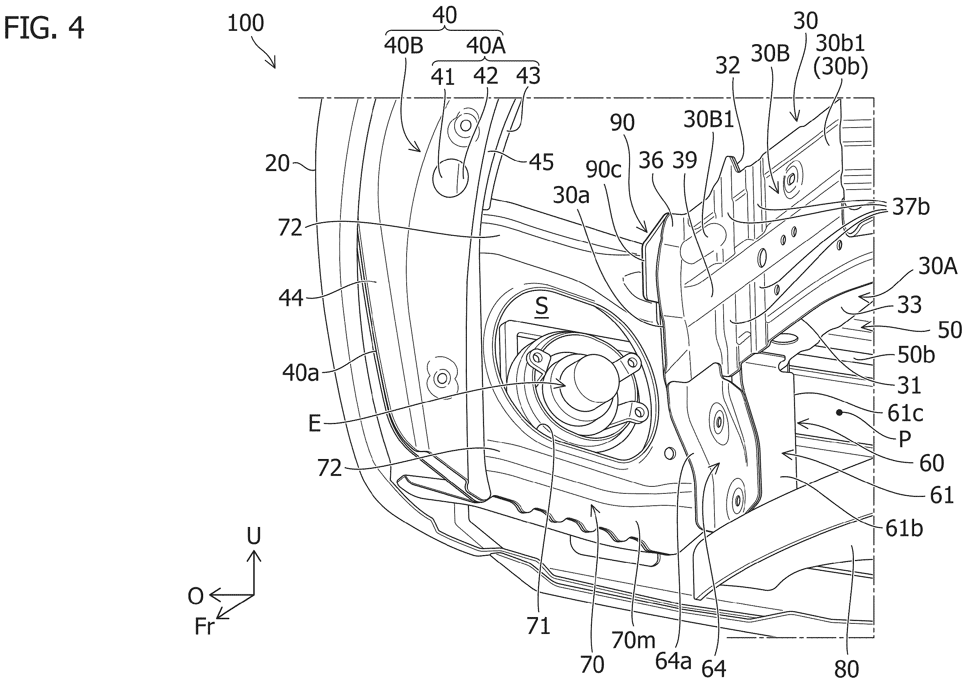

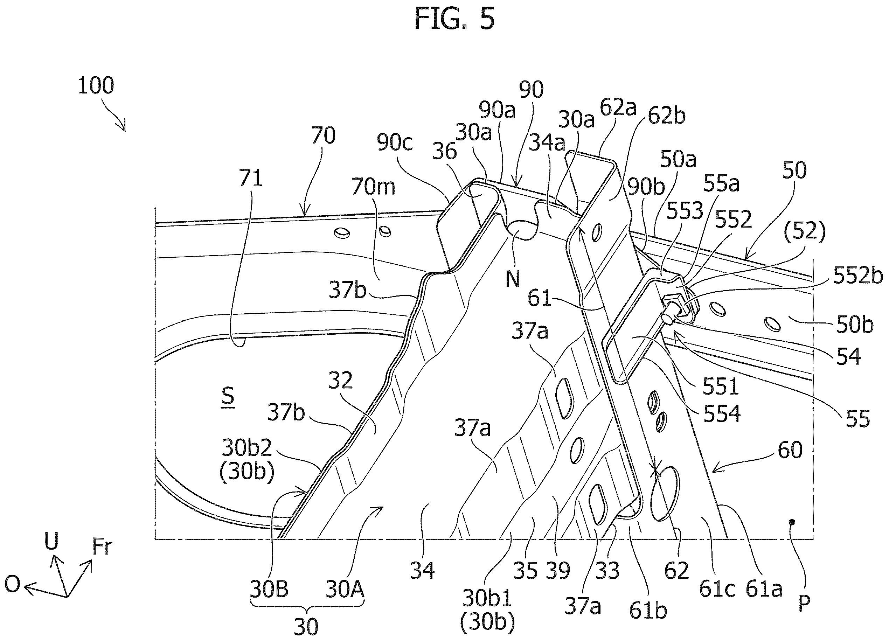

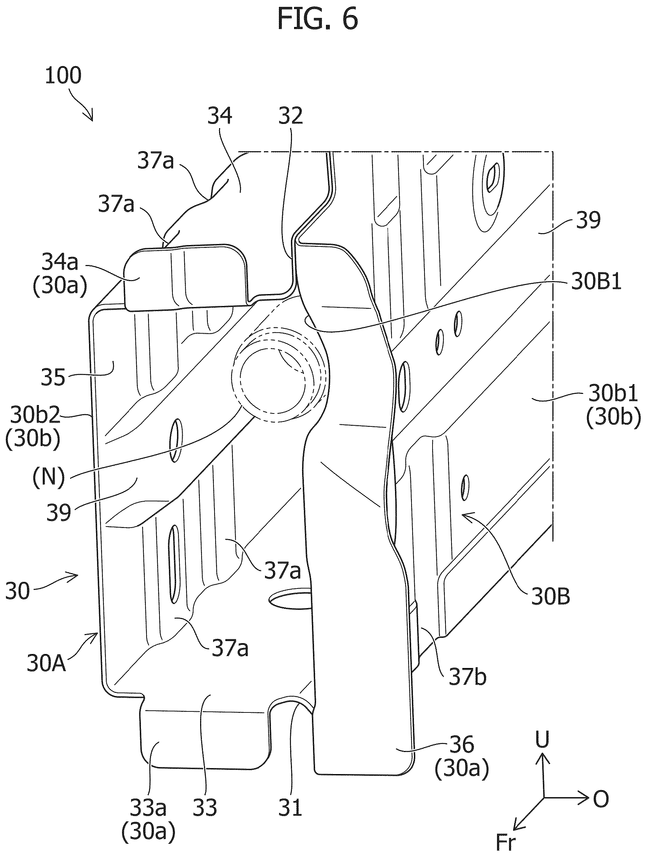

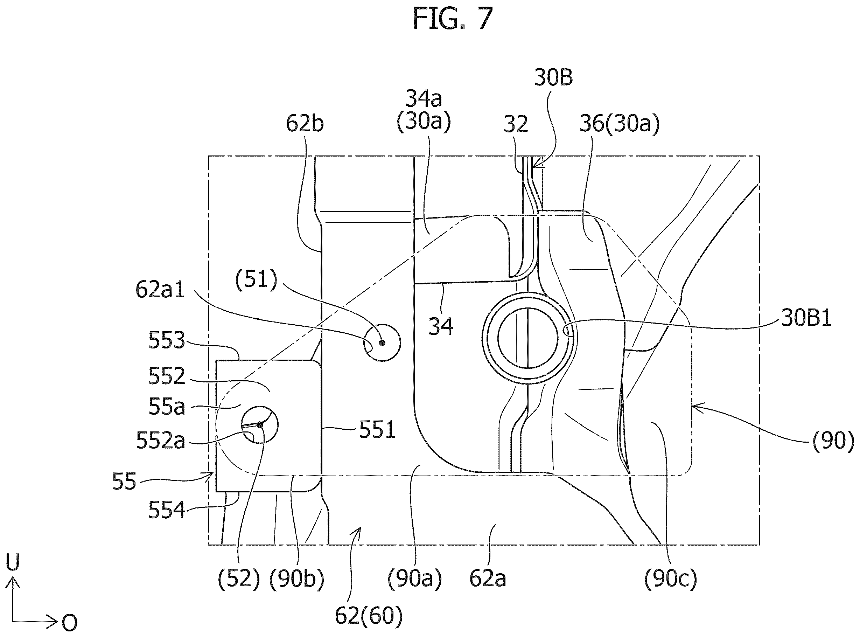

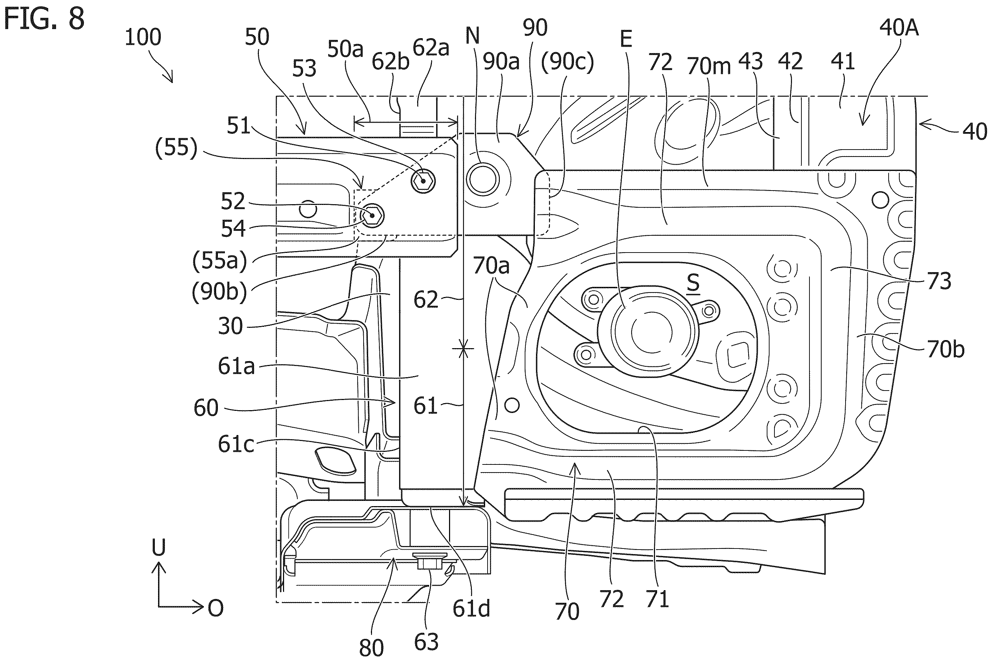

Figure 4 is a perspective view of the main portion of the vehicle front structure 100 when viewed from the vehicle lower side and the vehicle rear side, and Figure 5 is a perspective view of the main portion of the vehicle front structure 100 when viewed from the vehicle upper side and the vehicle rear side. Figures 6 and 7 are diagrams for description of the internal structure of the side member 30, Figure 6 being a perspective view, Figure 7 being a front view, and Figure 8 is a partially enlarged front view of the vehicle front structure 100. Note that the front bumper 20 and the electrical component E are removed in Figure 5, any member disposed forward of the side member 30 is removed in Figure 6, and the cross member 50 and the front panel 70 are removed in Figure 7, in which the outer shape of a front end plate 90 to be described later is illustrated with a dashed and double-dotted line.

In the illustrated example, as illustrated in Figures 3 to 7, the side member 30 includes a side member body 30A and a side member reinforcement 30B. The side member body 30A has a hat-shaped sectional shape opened outward in the vehicle width direction and extends in the vehicle front-rear direction. A side opening of the side member body 30A is blocked by the side member reinforcement 30B being joined to a lower flange 31 and an upper flange 32 of the side member body 30A by spotwelding or the like. As illustrated in Figure 6, a substantially rectangular tubular closed sectional structure is formed by the side member body 30A and the side member reinforcement 30B. Specifically, the side member body 30A includes a lower wall 33, an upper wall 34 located above the lower wall 33, a member vertical wall 35 connecting the vehicle-width-direction inner end of the lower wall 33 and the vehicle-width-direction inner end of the upper wall 34, the lower flange 31 extending downward from the vehicle-width-direction outer end of the lower wall 33, and the upper flange 32 extending upward from the vehicle-width-direction outer end of the upper wall 34. The side member 30 includes a side member outer flange 36 extending outward in the vehicle width direction from the front end of the side member 30. In the illustrated example, the side member outer flange 36 extends outward in the vehicle width direction from the front end of the side member reinforcement 30B.

In the illustrated example, as shown in Figures 1 to 4 and 8, a lower side member 80 extends in the vehicle front-rear direction below the side member 30. The lower side member 80 is a high-rigidity member. The lower side member 80 extends toward the vehicle front side from a vehicle-width-direction outer portion of a lower cross member (not illustrated) extending in the vehicle width direction below the dash panel 10. Portions of the left and right side members 30 on the dash panel 10 side are connected to the vehicle-width-direction outer portions of the lower cross member.

The dash side frame 40 is a member located outward of the side member 30 in the vehicle-width-direction and extending from a position above the front wheel T toward the front bumper 20. In the illustrated example, the dash side frame 40 extends from the vehicle-width-direction outer side of an upper portion of the dash panel 10, more specifically, the dash side panel 11 (refer to Figure 2) toward the vehicle front side, up to a position spaced outward of the front end of the side member 30 in the vehicle-width-direction. As illustrated in Figure 2, the dash side frame 40 is tilted downward toward the front and substantially linearly extends within a range from the dash panel 10 side to a predetermined intermediate point in the vehicle front-rear direction, and extends substantially in an arc shape, being curved downward in the vehicle as it extends toward the front bumper 20, within a range from the intermediate point to a distal end.

The dash side frame 40 linearly extends in the vehicle up-down direction at a front portion of the lower end of the dash side frame 40 and includes, at the front portion of the lower end, a front surface portion 40a opposing the rear surface of the front bumper 20 and facing forward. The front surface portion 40a constitutes a front end portion of the dash side frame 40. The front surface portion 40a is located between the rear surface (back surface) of the front bumper 20 and the front end of the front wheel T in the vehicle front-rear direction and is located in the range of the tire width of the front wheel T in the vehicle width direction.

The front end portion (front surface portion 40a) of the dash side frame 40 is located (offset) rearward of a front end portion 30a of the side member 30 in the vehicle front-rear direction. The side member 30 and the dash side frame 40 are spaced from each other in the vehicle width direction.

In the illustrated example, the dash side frame 40 includes a frame body 40A and a lower frame 40B, which are joined to each other. The rear end of the frame body 40A is located rearward of the rear end of the lower frame 40B, and a rear portion of the lower frame 40B is disposed so as to overlap a front portion of the frame body 40A from outside in the vehicle width direction. The frame body 40A and the lower frame 40B are offset from each other in the frame longitudinal direction while partially overlapping each other, and the lower end of the lower frame 40B projects (extends) downward beyond the lower end (front end) of the frame body 40A.

Specifically, the frame body 40A extends within a range from the rear end of the dash side frame 40 to the upper end of the front surface portion 40a. The frame body 40A extends with a substantially crank-shaped sectional shape in a sectional view orthogonal to its extending direction. The frame body 40A is constituted by an upper wall 41 having a surface facing upward and forward, a vertical wall 42 extending downward and rearward from a vehicle-width-direction inner portion of the upper wall 41, and a frame lower flange 43 extending inward in the vehicle width direction from a lower edge portion of the vertical wall 42.

The lower frame 40B extends with a substantially hat-shaped sectional shape (refer to Figure 4) opened toward the vehicle upper side and the vehicle front side. In a range in which the frame body 40A and the lower frame 40B overlap, the upward opening of the lower frame 40B is blocked by the frame body 40A (the vehicle-width-direction outer portion of the upper wall 41 and the frame lower flange 43) being joined to each of a left flange 44 and a right flange 45 of the lower frame 40B by spotwelding or the like. Accordingly, a substantially rectangular tubular closed sectional structure is formed in the range in which the frame body 40A and the lower frame 40B overlap.

The cross member 50 is a member supporting the front bumper 20 from the rear surface side and extends in the vehicle width direction along the rear surface of the front bumper 20. A vehicle-width-direction end portion 50a of the cross member 50 is coupled to the front end portion 30a of the side member 30. Accordingly, the cross member 50 connects the front end portion 30a of the left side member 30 and the front end portion 30a of the right side member 30. The cross member 50 is formed by, for example, subjecting a single thin metal plate material to press working or the like. The width of the cross member 50 in the vehicle up-down direction is, for example, shorter than the width of the side member 30 in the vehicle up-down direction. In the illustrated example, the cross member 50 linearly extends in the vehicle width direction without being curved in the vehicle front-rear direction and is formed to be flat in the vehicle front-rear direction.

In the vehicle front structure 100, during a collision such as a frontal collision, an impact load input to the vehicle front portion is efficiently transferred to the left and right side members 30 at least through the cross member 50, and each side member 30 deforms so that impact energy at the frontal collision is effectively absorbed as deformation energy. In this manner, the vehicle front structure 100 has an impact absorption structure that can absorb impact in a frontal collision.

The support brace 60 is a member supporting a front portion of the side member 30 from below. The support brace 60 is disposed on the upper surface of a front end portion of the lower side member 80 and supported from below by the lower side member 80. The support brace 60 connects the front end portion 30a of the side member 30 and the front end portion of the lower side member 80.

In the illustrated example, as illustrated in Figures 3 to 5, 7, and 8, the support brace 60 includes a brace body portion 61 and a brace extension 62. The brace body portion 61 has, for example, a groove-shaped sectional shape opened toward the vehicle-width-direction outer side and extends from the upper surface of the lower side member 80 to the lower surface of the side member body 30A of the side member 30. Specifically, the brace body portion 61 has a front wall 61a, a rear wall 61b, an inner side wall 61c, a bottom wall 61d. A lower end portion (bottom wall 61d) of the brace body portion 61 is attached to the lower side member 80 by a fastening member (in the illustrated example, a bolt 63). The brace extension 62 includes a front extension 62a extending upward continuously with the front wall 61a, and a side extension 62b extending upward continuously with the inner side wall 61c. The brace extension 62 protrudes upward beyond the upper wall 34 of the side member 30.

The front wall 61a of the brace body portion 61 is joined to a front end lower flange 33a (refer to Figure 6) extending downward from the front end of the lower wall 33 of the side member 30 by spotwelding or the like, and an upper end portion (refer to Figure 4) of the rear wall 61b of the brace body portion 61 is joined to the lower wall 33 of the side member 30 by spotwelding or the like. Accordingly, the support brace 60 connects the side member 30 and the lower side member 80. The front extension 62a is disposed so as to block most of a front end opening of the side member 30. The front extension 62a is joined to a front end upper flange 34a (refer to Figures 6 and 7) extending upward from the front end of the upper wall 34 of the side member 30 by spotwelding or the like. The side extension 62b is joined to the member vertical wall 35 of the side member 30 by spotwelding or the like.

A brace reinforcement 64 is joined to the support brace 60. The brace reinforcement 64 is a member reinforcing a vehicle-width-direction outer portion of the front wall 61a of the support brace 60 from the rear side and is joined to the brace body portion 61 by spotwelding or the like so as to block a side opening of the brace body portion 61. A substantially rectangular tubular pillar extending in the up-down direction is formed by the brace body portion 61 and the brace reinforcement 64.

As illustrated in Figure 4, the side member outer flange 36 extends continuously with a brace outer flange 64a extending outward in the vehicle width direction from the front end of the brace reinforcement 64. An upper end portion of the brace outer flange 64a overlaps the rear surface of a lower end portion of the side member outer flange 36 and is joined thereto by spotwelding or the like. A vehicle-width-direction outer portion of the front extension 62a of the support brace 60 is joined to the side member outer flange 36 by spotwelding or the like, and the vehicle-width-direction outer portion of the front wall 61a of the support brace 60 is joined to the brace outer flange 64a by spotwelding or the like.

As illustrated in Figure 7, a vehicle-width-direction outer portion of an upper portion of the brace extension 62 (front extension 62a) of the support brace 60 is notched. In a state in which the support brace 60 is joined to the front end portion 30a (such as the front end lower flange 33a and the front end upper flange 34a) of the side member 30, a portion corresponding to the notched portion of the brace extension 62 in the front end opening of the side member 30 remains open. The front end plate 90, to be described later, is provided so as to block the portion corresponding to the notched portion of the brace extension 62 in the front end opening of the side member 30.

The front panel 70 is a panel connecting the front end portion 30a of the side member 30 and the front end portion (front surface portion 40a) of the dash side frame 40 and facing the vehicle front side. The front panel 70 extends from the front end portion 30a of the side member 30 to the front end portion (front surface portion 40a) of the dash side frame 40, has a front surface facing the vehicle front side, and is joined to the side member 30 and the dash side frame 40.

Specifically, in the front panel 70, an intermediate panel portion 70m between the side member 30 and the dash side frame 40 is tilted so as to be separated rearward from the front end portion 30a of the side member 30 in the vehicle front-rear direction as it extends from the inner side toward the outer side in the vehicle width direction. A vehicle-width-direction inner portion 70a and a vehicle-width-direction outer portion 70b of the front panel 70 linearly extend in the vehicle width direction and in parallel to each other, and the intermediate panel portion 70m connects the vehicle-width-direction inner portion 70a and the vehicle-width-direction outer portion 70b.

The front panel 70 has a large front surface facing the vehicle front side and opposing the rear surface of the front bumper 20. The vehicle-width-direction inner portion 70a of the front panel 70 is joined to the front end plate 90 and the support brace 60 to be described later, which are joined to the front end portion 30a of the side member 30, from the front side by spotwelding or the like, and the vehicle-width-direction outer portion 70b of the front panel 70 is joined to the front end portion (front surface portion 40a) of the dash side frame 40 from the front side by spotwelding or the like.

The front panel 70 has an area larger than the areas of the front end portion 30a of the side member 30 and the front end portion (front surface portion 40a) of the dash side frame 40 in a plan view from the vehicle front side. In the illustrated example, the front panel 70 extends in the vehicle width direction and the vehicle up-down direction and is formed as a panel having a substantially rectangular outer shape, and a large flat surface facing the vehicle front side is easily formed by the front surface of the front panel 70.

In the vehicle front structure 100, during a collision such as a frontal collision, an impact load input to the vehicle front portion is efficiently distributed and transferred to the left and right side members 30 and the left and right dash side frames 40 through the cross member 50 and the front panel 70, and each side member 30 and each dash side frame 40 deform so that impact energy at the frontal collision is more efficiently absorbed as deformation energy.

The front panel 70 as part of the impact absorption structure is close to and opposite to a vehicle-width-direction outer portion of the rear surface of the front bumper 20. In other words, the front end portion 30a of the side member 30 and the front end portion of the dash side frame 40 is located near the rear surface of the front bumper 20. The vehicle-width-direction outer portion of the rear surface of the front bumper 20 is set as a disposition place for the electrical component E. To achieve such disposition (arrangement) of the electrical component E, the front panel 70 includes a housing portion 71 having inside a housing region S that houses at least a rear portion of the electrical component E attached to the front bumper 20 and protruding rearward. In the illustrated example, the housing region S is a hole penetrating through the front panel 70.

As illustrated in, for example, Figure 8, the front panel 70 includes a lateral reinforcement portion 72 extending in the vehicle width direction, and a vertical reinforcement portion 73 extending in the vehicle up-down direction along the front end portion (front surface portion 40a) of the dash side frame 40. Specifically, the lateral reinforcement portions 72 are provided at respective positions above and below the housing portion 71. Each lateral reinforcement portion 72 is made of a bead bulging toward the vehicle front side and extending in the vehicle width direction. In the illustrated example, each lateral reinforcement portion 72 extends from a vehicle-width-direction inner end portion of the front panel 70 to a position forward of the front surface portion 40a of the dash side frame 40, and an end portion of the upper lateral reinforcement portion 72 on the side member 30 side is formed so as to vertically bifurcate. In the illustrated example, the vertical reinforcement portion 73 extends continuously with the upper and lower lateral reinforcement portions 72, and similarly to the lateral reinforcement portions 72, is made of a bead bulging toward the vehicle front side. The vertical reinforcement portion 73 extends from a vehicle-width-direction outer end portion of the upper lateral reinforcement portion 72 to a vehicle-width-direction outer end portion of the lower lateral reinforcement portion 72.

Here, the vehicle front structure 100 has a structure below to reliably exhibit predetermined impact absorption performance by utilizing the cross member 50 and the side member 30.

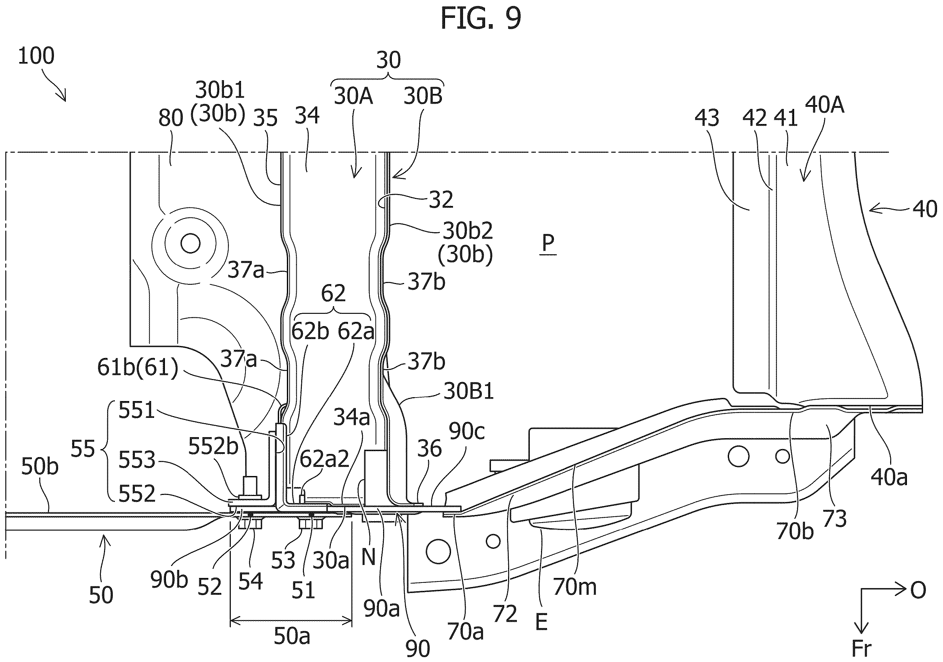

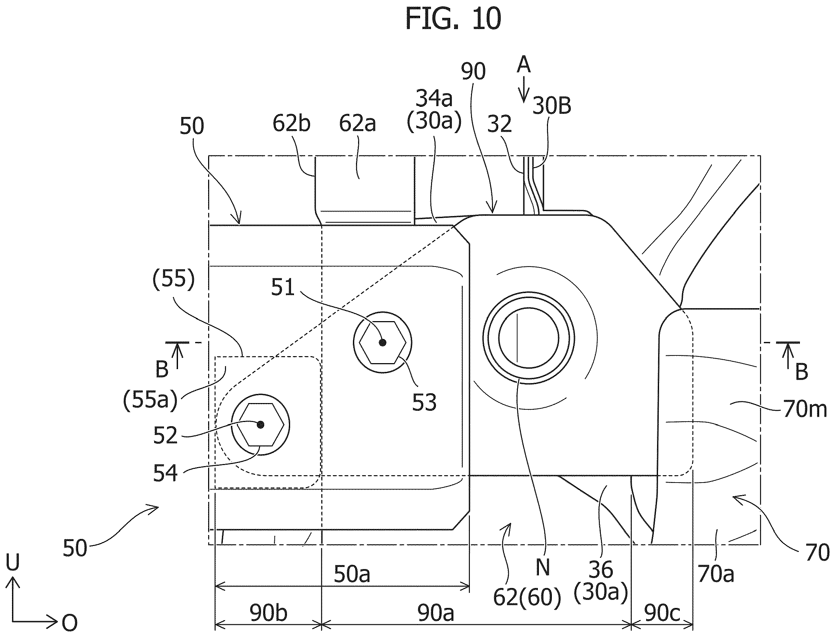

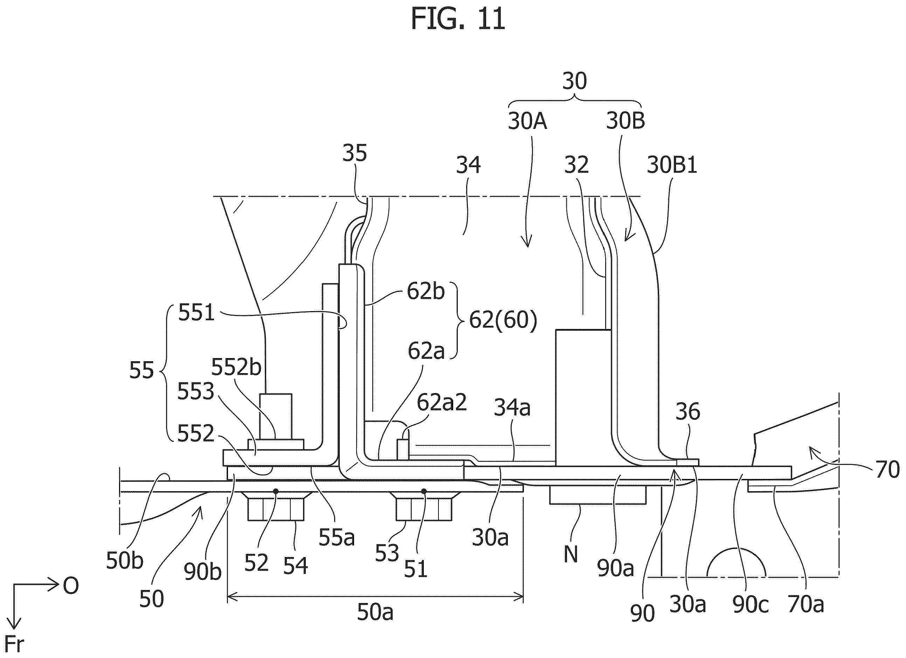

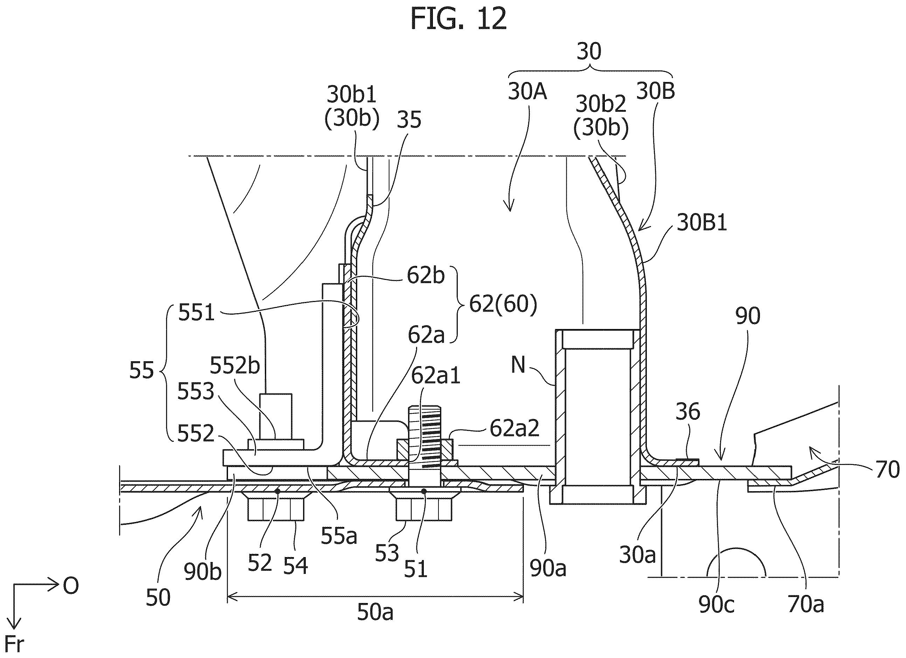

The main portion of the vehicle front structure 100 will be described next. Figures 9 to 12 are diagrams for description of the main portion of the vehicle front structure 100. Figure 9 is a top view of the main portion, Figure 10 is a partially enlarged front view of a part of the vehicle front structure 100, the part including the front end plate 90, to be described later, Figure 11 is an enlarged top view of Figure 10 when viewed in direction A, and Figure 12 is a line B-B cross-sectional view of Figure 10.

As illustrated in Figures 7 to 9, 10, and 12, the vehicle front structure 100 includes a bracket 55 in addition to the above-described members. The bracket 55 is made of a thin metal plate material. The bracket 55 is a member for improving coupling strength between the vehicle-width-direction end portion 50a of the cross member 50 and the side member 30 and achieving maintenance of coupling between the cross member 50 and the side member 30 during a collision. The vehicle-width-direction end portion 50a of the cross member 50 is a portion having a predetermined width in the vehicle width direction. The vehicle front structure 100 includes two brackets 55. In the illustrated example, the shape of a component constituting the left bracket 55 is the same as the shape of a component constituting the right bracket 55. The left bracket 55 and the right bracket 55 are disposed with the left and right sides inverted.

Each bracket 55 is joined to a vehicle-width-direction side portion 30b of the front portion of the corresponding side member 30. The bracket 55 protrudes in the vehicle width direction from the side portion 30b of the side member 30 in the state of being joined to the side member 30. A front end portion 55a of the bracket 55 has a flat end face (front surface) facing the vehicle front side in the state of being joined to the side member 30. The position of the end face (front surface) of the front end portion 55a of the bracket 55 in the vehicle front-rear direction is aligned with the position of the front surface of the front end portion 30a of the side member 30 in the vehicle front-rear direction.

In the vehicle front structure 100, coupling of the vehicle-width-direction end portion 50a of the cross member 50 to the side member 30 is achieved by two systems. Specifically, the coupling is achieved by coupling to the front end portion 30a of the side member 30 from the vehicle front side and by coupling through the bracket 55.

Each vehicle-width-direction end portion 50a of the cross member 50 includes, as coupling places of the two systems, a first coupling portion 51 and a second coupling portion 52. Each of the right end portion 50a and the left end portion 50a of the cross member 50 includes the first coupling portion 51 and the second coupling portion 52.

The first coupling portion 51 is located forward of the front end portion 30a of the side member 30 and coupled to the front end portion 30a. Accordingly, when viewed from the vehicle front side, the first coupling portion 51 is located within the range of the front end portion 30a of the side member 30 and is set at a position where it can be coupled to the front end portion 30a from the front side of the front end portion 30a. Specifically, when viewed from the vehicle front side, the first coupling portion 51 is located inside the substantially rectangular tubular closed sectional structure of the side member 30 (in detail, substantially rectangular tubular closed sectional structure constituted by the lower wall 33, the upper wall 34, the member vertical wall 35, and the side member reinforcement 30B).

The second coupling portion 52 is spaced in the vehicle width direction toward the bracket 55 side from the front end portion 30a of the side member 30 and coupled to the front end portion 55a of the bracket 55 joined to the side portion 30b of the side member 30. Thus, when viewed from the vehicle front side, the second coupling portion 52 is offset toward the bracket 55 with respect to the front end portion 30a of the side member 30, is located outside the range of the substantially rectangular tubular closed sectional structure of the front end portion 30a of the side member 30, and is set at a position where it can be coupled to the side portion 30b of the side member 30 through the bracket 55. Accordingly, the first coupling portion 51 and the second coupling portion 52 are spaced from each other at least in the vehicle width direction. More specifically, when viewed from the vehicle front side, the second coupling portion 52 is set in a region overlapping the front end portion 55a of the bracket 55 in the cross member 50 and does not overlap the side member 30.

In the present embodiment, the side portion 30b of the side member 30 to which the bracket 55 is joined is a vehicle-width-direction inner portion 30b1 of the side member 30. In the illustrated example, the member vertical wall 35 of the side member body 30A constitutes the vehicle-width-direction inner portion 30b1 of the side member 30, and the side member reinforcement 30B constitutes a vehicle-width-direction outer portion 30b2 of the side member 30. The bracket 55 is joined to a portion close to the front end in the member vertical wall 35 (vehicle-width-direction inner portion 30b1) by spotwelding or the like. In other words, the bracket 55 is disposed so as to protrude toward the vehicle-width-direction inner side of the side member 30 in the vicinity of the front end portion 30a of the side member 30, and the flat end face of the front end portion 55a of the bracket 55 faces the vehicle front side.

In the illustrated example, the side extension 62b of the brace extension 62 of the support brace 60 is sandwiched between the member vertical wall 35, which is the vehicle-width-direction inner portion 30b1 of the side member 30, and the bracket 55 (specifically, a front-rear wall 551 to be described later). The side extension 62b is joined to the member vertical wall 35 by spotwelding or the like. In the illustrated example, the bracket 55 is joined to the vehicle-width-direction inner portion 30b1 of the side member 30 by being joined to the side extension 62b joined to the vehicle-width-direction inner portion 30b1 of the side member 30. Specifically, for example, the bracket 55 (front-rear wall 551), the side extension 62b, and the member vertical wall 35 are joined in three layers by spotwelding or the like.

In the vehicle up-down direction, the bracket 55 joined to the vehicle-width-direction inner portion 30b1 of the side member 30 is located within the range of the width of the cross member 50 in the vehicle up-down direction. In the illustrated example, the bracket 55 is located on the upper side within the range of the width of the cross member 50 in the vehicle up-down direction.

In the present embodiment, the bracket 55 has the front-rear wall 551 extending in the front-rear direction along the vehicle-width-direction inner portion 30b1, and a lateral wall 552 bent inward in the vehicle width direction from the front end of the front-rear wall 551 and extending along a rear surface 50b of the cross member 50. Accordingly, the bracket 55 is bent in a substantially L shape when viewed from one side in the vehicle up-down direction. The front-rear wall 551 is joined to the side extension 62b joined to the member vertical wall 35 and is joined to the cross member 50 through the side extension 62b. The lateral wall 552 constitutes the front end portion 55a of the bracket 55 and has a flat end face (front surface) facing the vehicle front side.

In the illustrated example, the width of the bracket 55 in the vehicle up-down direction is shorter than the width of the cross member 50 in the vehicle up-down direction. The length of the front-rear wall 551 in the vehicle front-rear direction is longer than the length of the lateral wall 552 in the vehicle width direction. A surface of the front-rear wall 551 on the side member 30 side is formed to be flat. The lateral wall 552 is formed in a substantially rectangular shape in a front view, and the front surface of the lateral wall 552 is formed to be flat. In the illustrated example, as shown in, for example, Figure 5, the bracket 55 includes a bracket upper flange 553 and a bracket lower flange 554. The bracket upper flange 553 extends along the upper edge of the front-rear wall 551 and the upper edge of the lateral wall 552. The bracket lower flange 554 extends along the lower edge of the front-rear wall 551 and the lower edge of the lateral wall 552. Portions of the flanges (553 and 554) along the front-rear wall 551 protrude toward the vehicle-width-direction inner side, and portions of the flanges (553 and 554) along the lateral wall 552 protrude toward the vehicle rear side.

In the present embodiment, the second coupling portion 52 is spaced inward in the vehicle width direction from the front end portion 30a of the side member 30 and is offset inward in the vehicle width direction from the front end portion 30a when viewed from the vehicle front side. When viewed from the vehicle front side, the vehicle-width-direction inner portion 30b1 of the side member 30 is located between the first coupling portion 51 and the second coupling portion 52 in the vehicle width direction. Accordingly, coupling places between the vehicle-width-direction end portion 50a of the cross member 50 and the side member 30 are set as two systems across the vehicle-width-direction inner portion 30b1 of the side member 30 in the vehicle width direction.

In the present embodiment, the second coupling portion 52 is coupled to the lateral wall 552 of the bracket 55. Accordingly, the second coupling portion 52 is set at a position overlapping the lateral wall 552 protruding inward in the vehicle width direction from the vehicle-width-direction inner portion 30b1 of the side member 30 when viewed from the vehicle front side. At the second coupling portion 52, the cross member 50 is coupled to the lateral wall 552 of the bracket 55 while the rear surface 50b is in contact with the front surface of the lateral wall 552.

In the present embodiment, the vehicle front structure 100 includes the front end plate 90 in addition to the above-described members. The front end plate 90 is made of a thin metal plate material. The front end plate 90 is a member extending in the vehicle width direction along the front end portion 30a of the side member 30 and the front end portion 55a of the bracket 55.

As illustrated in Figures 7 to 12, the front end plate 90 overlaps the front end portion 55a of the bracket 55, and overlaps the front extension 62a of the support brace 60 and the front end upper flange 34a and the side member outer flange 36 of the side member 30 so as to block an upper-left corner surrounding portion of the front end opening of the side member 30 from the front side.

In the illustrated example, a towing nut N is provided on the front end plate 90. The towing nut N is a nut used for towing another vehicle or the like and is joined to the front end plate 90 by welding in a state of penetrating through the front end plate 90. A rear portion of the towing nut N is located inside the closed structure of the side member 30. The rear portion of the towing nut N is joined to a vehicle-width-direction side portion of the side member 30. In the illustrated example, a bulging portion 30B1 toward the vehicle-width-direction outer side is formed at a portion corresponding to the towing nut N in the side member reinforcement 30B of the side member 30. The rear portion of the towing nut N is joined to the inner surface of the bulging portion 30B1.

In the present embodiment, the front end plate 90 is joined to the front end portion 30a of the side member 30 in a state of being sandwiched between the end portion 50a of the cross member 50 and each of the front end portion 30a of the side member 30 and the front end portion 55a of the bracket 55. In the illustrated example, the front end plate 90 is joined to the front end upper flange 34a and the side member outer flange 36 of the side member 30 by spotwelding or the like.

In the present embodiment, the first coupling portion 51 is coupled to the front end plate 90 joined to the front end portion 30a of the side member 30. Accordingly, the first coupling portion 51 is coupled to the front end portion 30a of the side member 30 by being coupled to the front end plate 90 joined to the front end portion 30a of the side member 30. The second coupling portion 52 is coupled to the front end portion 55a of the bracket 55 together with the front end plate 90. Accordingly, the end portion 50a of the cross member 50, the front end plate 90, and the front end portion 55a of the bracket 55 are coupled to one another at the second coupling portion 52.

Specifically, the front end plate 90 includes a plate body 90a, a first protrusion portion 90b, and a second protrusion portion 90c. The first coupling portion 51 is coupled to the plate body 90a, and the second coupling portion 52 is coupled to the first protrusion portion 90b.

The plate body 90a is located forward of the front end portion 30a of the side member 30 and joined to the front end portion 30a (the front end upper flange 34a and the side member outer flange 36).

When viewed from the vehicle front side, the first protrusion portion 90b is formed continuously with the plate body 90a so as to protrude toward the bracket 55 side (in this example, the vehicle-width-direction inner side) in the vehicle width direction with respect to the front end portion 30a of the side member 30. The first protrusion portion 90b protrudes inward in the vehicle width direction beyond the member vertical wall 35 and the side extension 62b. The second coupling portion 52 is coupled to the front end portion 55a of the bracket 55 together with the first protrusion portion 90b. In the illustrated example, the first protrusion portion 90b is also referred to as an inner protrusion portion.

When viewed from the vehicle front side, the second protrusion portion 90c is formed continuously with the plate body 90a so as to protrude toward a side opposite to the bracket 55 (in this example, the vehicle-width-direction outer side) in the vehicle width direction with respect to the front end portion 30a of the side member 30. The second protrusion portion 90c protrudes outward in the vehicle width direction beyond the side member outer flange 36. An upper portion of the vehicle-width-direction inner portion 70a of the front panel 70 is joined to the second protrusion portion 90c by spotwelding or the like. In the illustrated example, the second protrusion portion 90c is also referred to as an outer protrusion portion.

In the present embodiment, the first coupling portion 51 is coupled to the front end portion 30a of the side member 30 by bolt fastening, and the second coupling portion 52 is coupled to the front end portion 55a of the bracket 55 by bolt fastening.

In the present embodiment, the first coupling portion 51 and the second coupling portion 52 are spaced from each other in both the vehicle width direction and the vehicle up-down direction. In the illustrated example, the first coupling portion 51 is spaced upward and outward in the vehicle width direction from the second coupling portion 52.

Specifically, as illustrated in Figures 8 to 12, a vehicle-width-direction inner portion of the plate body 90a of the front end plate 90 and the front extension 62a of the support brace 60 are disposed between the first coupling portion 51 of the cross member 50 and a vehicle-width-direction inner portion of the front end upper flange 34a of the side member 30, and the vehicle-width-direction inner portion of the plate body 90a of the front end plate 90 is sandwiched between the first coupling portion 51 of the cross member 50 and the front extension 62a. As illustrated in Figure 12, the first coupling portion 51 of the cross member 50 is fastened to the plate body 90a and the front extension 62a by one first bolt 53 in the state in which the vehicle-width-direction inner portion of the plate body 90a is sandwiched between the first coupling portion 51 and the front extension 62a. Specifically, at the first coupling portion 51, the first bolt 53 is inserted into bolt insertion holes formed in the cross member 50 and the front end plate 90 and into a first bolt insertion hole 62a1 formed in the front extension 62a. Then, by screwing an end portion of the first bolt 53 into a first weld nut 62a2 welded to the rear surface of the front extension 62a, the first coupling portion 51 of the cross member 50 is fastened to the plate body 90a of the front end plate 90 and the front extension 62a of the support brace 60 by the first bolt 53, and accordingly, is coupled to the front end portion 30a of the side member 30 by bolt fastening.

The first protrusion portion 90b of the front end plate 90 is disposed between the second coupling portion 52 of the cross member 50 and the lateral wall 552 of the bracket 55, and the first protrusion portion 90b of the front end plate 90 is sandwiched between the second coupling portion 52 of the cross member 50 and the lateral wall 552. As illustrated in Figure 12, the second coupling portion 52 of the cross member 50 is fastened to the first protrusion portion 90b and the lateral wall 552 by one second bolt 54 in the state in which the first protrusion portion 90b is sandwiched between the second coupling portion 52 and the lateral wall 552. Specifically, at the second coupling portion 52, the second bolt 54 is inserted into bolt insertion holes formed in the cross member 50 and the front end plate 90 and into a second bolt insertion hole 552a formed in the lateral wall 552. Then, by screwing an end portion of the second bolt 54 into a second weld nut 552b welded to the rear surface of the lateral wall 552, the second coupling portion 52 of the cross member 50 is fastened to the lateral wall 552 of the bracket 55 by the second bolt 54 together with the first protrusion portion 90b of the front end plate 90, and accordingly, is coupled to the front end portion 55a of the bracket 55 by bolt fastening.

In the illustrated example, the vehicle-width-direction inner portion 70a of the front panel 70 is joined to the side member outer flange 36 and the vehicle-width-direction outer portion of the front wall 61a of the support brace 60. Specifically, the vehicle-width-direction inner portion 70a of the front panel 70 is joined, at an upper portion, to the front end plate 90 joined to the side member outer flange 36 by spotwelding or the like, and accordingly, is joined to the side member outer flange 36 through the front end plate 90. The vehicle-width-direction inner portion 70a of the front panel 70 is also joined to, at an intermediate portion, the vehicle-width-direction outer portion of the front extension 62a joined to the side member outer flange 36 by spotwelding or the like, and accordingly, is joined to the side member outer flange 36 through the front extension 62a. Then, the vehicle-width-direction inner portion 70a of the front panel 70 is joined, at a lower portion, directly to the vehicle-width-direction outer portion of the front wall 61a of the support brace 60 by spotwelding or the like.

The vehicle-width-direction inner portion 70a of the front panel 70 is solidly supported from the rear side by the front end plate 90 and flanges (the side member outer flange 36, the brace outer flange 64a) located rearward of the front extension 62a and the front wall 61a. Specifically, the vehicle-width-direction inner portion 70a of the front panel 70 is supported from the rear side by the front end plate 90 at an upper portion, and is supported from the rear side by an overlapping part (three-layered element) among the vehicle-width-direction outer portion of the front wall 61a, a lower portion of the side member outer flange 36, and an upper portion of the brace outer flange 64a at part of an intermediate portion.

The vehicle-width-direction end portion 50a of the cross member 50, the front end portion 55a of the bracket 55, and an upper portion (front extension 62a) of the support brace 60 are coupled to the front end plate 90 joined to the front end portion 30a of the side member 30 by bolt fastening, and the vehicle-width-direction inner portion 70a of the front panel 70 is joined thereto by spotwelding. In other words, a plurality of members (the side member 30, the cross member 50, the support brace 60, the front panel 70, and the bracket 55) are joined to the front end plate 90, and the front end plate 90 couples the plurality of members such that the plurality of members are disposed in a narrow space around the vicinity of a front end portion of the side member 30.

In the present embodiment, as illustrated in Figures 3 to 6 and 9, the side member 30 includes front fragile portions 37a and 37b. In the present embodiment, as illustrated in Figure 3, the side member 30 further includes an intermediate fragile portion 38.

The front fragile portions 37a and 37b are provided on the vehicle rear side of the bracket 55 in the front portion of the side member 30 and formed to be more fragile than a rear portion of the side member 30. The front fragile portions 37a and 37b include an inner fragile portion 37a and an outer fragile portion 37b. The inner fragile portion 37a is formed in the vehicle-width-direction inner portion 30b1 (in the illustrated example, the member vertical wall 35) of the side member 30, and the outer fragile portion 37b is formed in the vehicle-width-direction outer portion 30b2 (in the illustrated example, the side member reinforcement 30B) of the side member 30. In addition, an intermediate recessed portion 39 recessed toward the inside of the side member 30 and extending in the vehicle front-rear direction is formed at an intermediate portion of each of the member vertical wall 35 and the side member reinforcement 30B in the vehicle up-down direction.

The inner fragile portion 37a and the outer fragile portion 37b are recessed grooves that are recessed toward the inside of the side member 30 and extend in the vehicle up-down direction. In the illustrated example, each of the inner fragile portion 37a and the outer fragile portion 37b is constituted by two recessed grooves disposed with a spacing therebetween in the front-rear direction. Each recessed groove is vertically divided by the intermediate recessed portion 39. The inner fragile portion 37a is provided at a position corresponding to the outer fragile portion 37b in the vehicle front-rear direction, and the inner fragile portion 37a and the outer fragile portion 37b are formed in shapes symmetric to each other with respect to the left and right sides. Accordingly, part of the front portion of the side member 30 is formed in a bellows shape, and accordingly, the front fragile portions 37a and 37b are formed. In the illustrated example, the inner fragile portion 37a (specifically, the recessed groove on the front side) is disposed adjacent to the bracket 55 in the vehicle front-rear direction, and the inner fragile portion 37a is located near the bracket 55.

When an impact load due to a frontal collision or the like is input to the front end portion 30a of the side member 30 through the cross member 50 or the like, each recessed groove of the front fragile portions 37a and 37b serves as a starting point of deformation so that the front portion of the side member 30 can deform so as to be crushed in the vehicle front-rear direction.

The intermediate fragile portion 38 is provided in the vehicle-width-direction inner portion 30b1 (member vertical wall 35) at a vehicle-front-rear-direction intermediate portion of the side member 30 and formed to be more fragile than the rear portion of the side member 30. The intermediate fragile portion 38 is formed to be more fragile than a portion corresponding to the intermediate fragile portion 38 in the vehicle-width-direction outer portion 30b2 of the side member 30.

The intermediate fragile portion 38 is provided rearward of the front fragile portions 37a and 37b at a vehicle-front-rear-direction intermediate portion of the member vertical wall 35. The intermediate fragile portion 38 is a recessed groove that is recessed toward the vehicle-width-direction outer side and extends in the vehicle up-down direction, and continuously extends from the upper end of the member vertical wall 35 to the lower end. When an impact load due to a frontal collision or the like is input to the front end portion 30a of the side member 30 through the cross member 50 or the like, the recessed groove of the intermediate fragile portion 38 serves as a starting point of bending deformation so that the vehicle-front-rear-direction intermediate portion of the side member 30 can deform to bend so as to be convex toward the vehicle-width-direction outer side. Accordingly, it is configured such that, at a frontal collision, deformation occurs that the front portion of the side member 30 is crushed in the front-rear direction such that the front end portion 30a of the side member 30 is displaced rearward and the vehicle-front-rear-direction intermediate portion of the side member 30 is bent toward the vehicle-width-direction outer side.

The vehicle front structure 100 according to the present embodiment includes the bracket 55 joined to the vehicle-width-direction side portion 30b of the front portion of the side member 30, and the vehicle-width-direction end portion 50a of the cross member 50 includes the first coupling portion 51 and the second coupling portion 52, the first coupling portion 51 being located forward of the front end portion 30a of the side member 30 and coupled to the front end portion 30a, the second coupling portion 52 being spaced in the vehicle width direction toward the bracket 55 side from the front end portion 30a of the side member 30 and coupled to the front end portion 55a of the bracket 55. Accordingly, coupling of the vehicle-width-direction end portion 50a of the cross member 50 to the side member 30 is achieved by two systems of coupling to the front end portion 30a of the side member 30 from the vehicle front side, and coupling through the bracket 55 from a position spaced in the vehicle width direction from the front end portion 30a. Thus, during a collision such as a frontal collision, an impact load input to the cross member 50 is not only transferred from the first coupling portion 51 to the side member 30 but is also transferred from the second coupling portion 52 to the side member 30. As a result, concentration of stress on the first coupling portion 51 is effectively reduced, and maintenance of coupling between the end portion 50a of the cross member 50 and the side member 30 can be more reliably achieved at a frontal collision or the like. Moreover, since the cross member 50 is reinforced from the vehicle rear side by the bracket 55, rigidity around the first coupling portion 51 and the second coupling portion 52 is improved, and breakage of the cross member 50 itself is also reduced. Furthermore, since the bracket 55 is spaced in the vehicle width direction from the front end portion 30a of the side member 30, deflection deformation of the second coupling portion 52 of the side member 30 toward the vehicle rear side is allowed in a frontal collision, and some of the impact energy can be absorbed by the deflection deformation. In this manner, in a frontal collision or the like, the vehicle front structure 100 can more reliably achieve maintenance of coupling between the end portion 50a of the cross member 50 and the side member 30 by the bracket 55 and can reduce breakage of the cross member 50 itself by allowing deflection deformation of the cross member 50, thereby reliably exhibiting predetermined impact performance by utilizing the cross member 50 and the side member 30. Moreover, in the vehicle front structure 100, since the first coupling portion 51 is located forward of the front end portion 30a of the side member 30, the first coupling portion 51 is located within the range of the front end portion 30a of the side member 30 when viewed from the vehicle front side. As a result, according to the vehicle front structure 100, the first coupling portion 51 can be accommodated, for example, within a range inside the tubular closed sectional structure of the side member 30 when viewed from the vehicle front side. Thus, as compared to a case in which the first coupling portion 51 is disposed outside the range of the front end portion 30a of the side member 30 (specifically, for example, outside the range of the closed sectional structure of the side member 30), the vehicle front structure 100 can reduce the range of the end portion 50a of the cross member 50 overlapping and coupled to the side member 30, and can also reduce the number of members related to coupling between the side member 30 and the cross member 50, thereby contributing to weight reduction.

As described above, with the vehicle front structure 100 according to the present embodiment, it is possible to provide a vehicle front structure capable of reliably exhibiting impact absorption performance of the vehicle front portion.

In the present embodiment, since the bracket 55 is joined to the vehicle-width-direction inner portion 30b1 of the side member 30, the bracket 55 and the second coupling portion 52 are spaced inward in the vehicle width direction from the front end portion 30a of the side member 30. Thus, the vehicle front structure 100 is preferable as a structure that reliably exhibits impact absorption performance of the vehicle front portion when an impact load is input to a vehicle-width-direction intermediate portion of the cross member 50 in a frontal collision. Specifically, in a frontal collision, an impact load is often input to the vehicle-width-direction intermediate portion of the cross member 50. In this case, the cross member 50 deforms so as to curve in a convex shape toward the vehicle rear side. During this curving deformation, a tensile load that pulls the end portion 50a inward in the vehicle width direction is generated at the vehicle-width-direction end portion 50a of the cross member 50 (around the first coupling portion 51 and the second coupling portion 52), and the cross member 50 is potentially broken by the tensile load. In the vehicle front structure 100, since the bracket 55 and the second coupling portion 52 are spaced inward in the vehicle width direction from the front end portion 30a and disposed at places where a tensile load may be generated in a frontal collision, breakage of the cross member 50 is more reliably reduced or prevented by the bracket 55 so that impact absorption performance is reliably exhibited.

In the present embodiment, the bracket 55 includes the front-rear wall 551 and the lateral wall 552, the front-rear wall 551 extending in the front-rear direction along the vehicle-width-direction inner portion 30b1, the lateral wall 552 being bent inward in the vehicle width direction from the front end of the front-rear wall 551 and extending along the rear surface 50b of the cross member 50, and the second coupling portion 52 is coupled to the lateral wall 552. Accordingly, in a frontal collision, deformation that bends toward the vehicle rear side with the vehicle-width-direction outer end of the lateral wall 552 serving as a fulcrum is likely to occur to the lateral wall 552 of the bracket 55. Thus, when the cross member 50 deforms so as to curve in a convex shape toward the vehicle rear side in a frontal collision, the lateral wall 552 of the bracket 55 is bent along the rear surface 50b at the end portion 50a of the cross member 50 while following deformation of the end portion 50a. As a result, strength against a tensile load that may be generated inward in the vehicle width direction around the second coupling portion 52 at the end portion 50a of the cross member 50 at a frontal collision is reliably ensured by the lateral wall 552 of the bracket 55 to further reliably achieve reduction or prevention of breakage of the cross member 50 and maintenance of coupling between the cross member 50 and the side member 30, which allows impact absorption performance to be further reliably exhibited.

In the present embodiment, in a frontal collision or the like, each of the front fragile portions 37a and 37b provided on the vehicle rear side of the bracket 55 in the front portion of the side member 30 serves as a starting point of deformation, and the front portion of the side member 30 can deform so as to be crushed in the vehicle front-rear direction on the rear side of the bracket 55. As a result, in a frontal collision or the like, compressive deformation of the side member 30 can be promoted to reliably absorb impact while influence on coupling between the bracket 55 and the second coupling portion 52 (that is, coupling between the side member 30 and the cross member 50) is reduced. In addition, at a frontal collision, the bracket 55 and the second coupling portion 52 are displaced toward the vehicle rear side along with compressive deformation caused by the front fragile portions 37a and 37b. Accordingly, as compared to a case without the rearward displacement, the amount of deformation of the second coupling portion 52 in a tensile direction due to a tensile load generated at a frontal collision is reduced, and reduction or prevention of breakage of the cross member 50 is further reliably achieved.

In the present embodiment, at a frontal collision or the like, the intermediate fragile portion 38 provided at the vehicle-width-direction inner portion 30b1 at the vehicle-front-rear-direction intermediate portion of the side member 30 serves as a starting point of bending deformation so that the vehicle-front-rear-direction intermediate portion of the side member 30 can deform to bend so as to be convex toward the vehicle-width-direction outer side. As a result, in a frontal collision, the vehicle-width-direction inner portion of the front end portion 30a of the side member 30 is displaced toward the vehicle rear side, and the front end portion 30a of the side member 30 is tilted so as to follow curving deformation of the cross member 50. Accordingly, as compared to a case in which the front end portion 30a of the side member 30 is not tilted, the amount of deformation of the second coupling portion 52 in a tensile direction due to a tensile load generated in a frontal collision is reduced, and reduction or prevention of breakage of the cross member 50 is extremely reliably achieved.

In the present embodiment, in the vehicle front structure 100, the first coupling portion 51 and the second coupling portion 52 at the end portion 50a of the cross member 50 can be reinforced from the rear side by the front end plate 90.
Accordingly, improvement of the reliability of maintenance of coupling between the end portion 50a of the cross member 50 and the side member 30, as well as reduction or prevention of damage around the front end portion 30a of the cross member 50 and breakage of the cross member 50 itself are more reliably achieved.

In the present embodiment, the first coupling portion 51 is coupled to the front end portion 30a of the side member 30 by bolt fastening, and the second coupling portion 52 is coupled to the front end portion 55a of the bracket 55 by bolt fastening. An impact load is distributed and transferred in two systems through a section of the first bolt 53 of the first coupling portion 51 and a section of the second bolt 54 of the second coupling portion 52. Accordingly, load distribution through sections of bolts is reliably promoted by the bolt fastening so that breakage of the cross member 50 is more reliably reduced or prevented with a simple structure. In addition, improvement of strength in the vehicle width direction against deformation (in other words, tensile deformation) in the vehicle width direction at the end portion 50a of the cross member 50 is achieved by the bolt fastening at the first coupling portion 51 and the second coupling portion 52 spaced from each other in the vehicle width direction. Moreover, since concentration of stress on the first coupling portion 51 is effectively reduced, damage or breakage of the first bolt 53 of the first coupling portion 51 is reliably reduced or prevented at a frontal collision or the like so that maintenance of coupling between the end portion 50a of the cross member 50 and the side member 30 by bolt fastening can be more reliably achieved.

In the present embodiment, the first coupling portion 51 and the second coupling portion 52 are spaced from each other in both the vehicle width direction and the vehicle up-down direction. Accordingly, in the vehicle front structure 100, a long distance (bolt fastening pitch) from a bolt fastening point of the first coupling portion 51 to a bolt fastening point of the second coupling portion 52 can be ensured within a limited and narrow region at the vehicle-width-direction end portion 50a of the cross member 50. As a result, stress that may be generated around the front end portion 30a of the side member 30 at a frontal collision or the like can be more reliably distributed so that more reliable reduction or prevention of bolt breakage can be achieved and maintenance of coupling can be further reliably achieved.

Although the embodiment of the present invention is described above, the present invention is not limited to the above-described embodiment but may be modified or changed based on the technical concept of the present invention.

For example, either one or both of the first coupling portion 51 and the second coupling portion 52 may employ another coupling method such as welding instead of bolt fastening. In addition, the vehicle-width-direction side portion 30b of the side member 30 to which the bracket 55 is joined is not limited to the vehicle-width-direction inner portion 30b1, but may be the vehicle-width-direction outer portion 30b2. In these cases as well, stress that may be generated around the front end portion 30a of the side member 30 at a frontal collision or the like is reliably distributed and transferred to the side member 30 through the first coupling portion 51 and the second coupling portion 52, and thus, predetermined impact absorption performance of the vehicle front portion by utilizing the cross member 50 and the side member 30 can be reliably exhibited as compared to conventional cases.

The second protrusion portion 90c of the front end plate 90 may be bent toward the vehicle rear side. Moreover, at least one or none of the lateral reinforcement portion 72, the vertical reinforcement portion 73, and a protrusion portion 74 may be provided. The protrusion portion 74 may be formed integrally with the front panel 70.

### [Reference Signs List]

- 10: Dash panel
- 11: Dash side panel
- 20: Front bumper
- 30: Side member
- 30a: Front end portion
- 30b: Side portion
- 30b1: Vehicle-width-direction inner portion
- 30b2: Vehicle-width-direction outer portion
- 30A: Side member body
- 30B: Side member reinforcement
- 30B1: Bulging portion
- 31: Lower flange
- 32: Upper flange
- 33: Lower wall
- 33a: Front end lower flange
- 34: Upper wall
- 34a: Front end upper flange
- 35: Member vertical wall (side portion)
- 36: Side member outer flange
- 37a: Inner fragile portion (front fragile portion)
- 37b: Outer fragile portion (front fragile portion)
- 38: Intermediate fragile portion
- 39: Intermediate recessed portion
- 40: Dash side frame
- 40a: Front surface portion
- 40A: Frame body
- 40B: Lower frame
- 41: Upper wall
- 42: Vertical wall
- 43: Frame lower flange
- 44: Left flange
- 45: Right flange
- 50: Cross member
- 50a: End portion
- 50b: Rear surface
- 51: First coupling portion
- 52: Second coupling portion
- 53: First bolt
- 54: Second bolt
- 55: Bracket
- 55a: Front end portion
- 551: Front-rear wall
- 552: Lateral wall
- 552a: Second bolt insertion hole
- 552b: Second weld nut
- 553: Bracket upper flange
- 554: Bracket lower flange
- 60: Support brace
- 61: Brace body portion
- 61a: Front wall
- 61b: Rear wall
- 61c: Inner side wall
- 61d: Bottom wall
- 62: Brace extension
- 62a: Front extension
- 62a1: First bolt insertion hole
- 62a2: First weld nut
- 62b: Side extension
- 63: Bolt
- 64: Brace reinforcement
- 64a: Brace outer flange
- 70: Front panel
- 70a: Vehicle-width-direction inner portion
- 70b: Vehicle-width-direction outer portion
- 70m: Intermediate panel portion
- 71: Housing portion
- 80: Lower side member
- 90: Front end plate
- 90a: Plate body
- 90b: First protrusion portion
- 90c: Second protrusion portion
- 100: Vehicle front structure
- E: Electrical component
- N: Towing nut
- P: Powertrain compartment
- S: Housing region
- T: Front wheel

## Claims

1. A vehicle front structure comprising:
a dash panel provided at a vehicle front portion;
a front bumper provided forward of the dash panel and extending in a vehicle width direction;
a side member extending from a vehicle-width-direction outer portion of a lower portion of the dash panel toward the front bumper; and
a cross member extending in the vehicle width direction along a rear surface of the front bumper, a vehicle-width-direction end portion of the cross member being coupled to a front end portion of the side member,
**characterized in that**
the vehicle front structure includes a bracket joined to a vehicle-width-direction side portion of a front portion of the side member, and
the end portion of the cross member includes a first coupling portion and a second coupling portion, the first coupling portion being located forward of and coupled to the front end portion of the side member, the second coupling portion being spaced in the vehicle width direction toward the bracket side from the front end portion of the side member and coupled to a front end portion of the bracket.

2. The vehicle front structure according to claim 1, wherein the side portion to which the bracket is joined is a vehicle-width-direction inner portion of the side member.

3. The vehicle front structure according to claim 2, wherein
the bracket has a front-rear wall and a lateral wall, the front-rear wall extending in a front-rear direction along the vehicle-width-direction inner portion, the lateral wall being bent toward a vehicle-width-direction inner side from a front end of the front-rear wall and extending along a rear surface of the cross member, and
the second coupling portion is coupled to the lateral wall.

4. The vehicle front structure according to claim 1, wherein the side member includes a front fragile portion provided on a vehicle rear side of the bracket in a front portion of the side member, the front fragile portion being formed to be more fragile than a rear portion of the side member.

5. The vehicle front structure according to claim 4, wherein
the side portion to which the bracket is joined is a vehicle-width-direction inner portion of the side member,
the side member further includes an intermediate fragile portion provided at the vehicle-width-direction inner portion in a vehicle-front-rear-direction intermediate portion of the side member, the intermediate fragile portion being formed to be more fragile than a rear portion of the side member, and
the intermediate fragile portion is formed to be more fragile than a portion corresponding to the intermediate fragile portion in a vehicle-width-direction outer portion of the side member.

6. The vehicle front structure according to claim 1, wherein, further comprising a front end plate extending in the vehicle width direction along the front end portion of the side member and the front end portion of the bracket, wherein
the front end plate is joined to the front end portion of the side member in a state of being sandwiched between the end portion of the cross member and each of the front end portion of the side member and the front end portion of the bracket, and
the first coupling portion is coupled to the front end plate joined to the front end portion of the side member, and the second coupling portion is coupled to the front end portion of the bracket together with the front end plate.

7. The vehicle front structure according to claim 1, wherein the first coupling portion is coupled to the front end portion of the side member by bolt fastening, and the second coupling portion is coupled to the front end portion of the bracket by bolt fastening.

8. The vehicle front structure according to any one of claims 1 to 7, wherein the first coupling portion and the second coupling portion are spaced from each other in both the vehicle width direction and a vehicle up-down direction.
